# EUROPEAN PATENT APPLICATION

(11) **EP 4 530 816 A1**
(43) Date of publication of application: **02.04.2025**
(21) Application number: 23201035.5
(22) Date of filing: 29.09.2023
(51) Int. Cl.: G06F 3/12, B41J 13/00, G06K 15/02

(54) **METHOD OF HANDLING SHEETS IN A PRINTING DEVICE AND SUCH PRINTING DEVICE**

(71) Applicant: Canon Production Printing Holding B.V., 5914 HH Venlo (NL)
(72) Inventor: BRANKAERT, Xavier C.M., Venlo (NL); HUNNEKENS, Henri P.J., Venlo (NL); VAN DE HEE, Johan, Venlo (NL)
(74) Representative: Canon Production Printing IP Department

(57) **Abstract**

Method of handling sheets in a printing device comprising a processing assembly that processes passing sheets by applying a processing parameter that is associated with a media type of each passing sheet, the method comprising the steps of: determining that a sequence of at least one sheet that is to pass through the processing assembly is to remain blank and that the sequence is preceded or followed by a sheet that is to be printed upon, controlling the processing assembly to apply the processing parameter for the sheet to be printed upon to this sheet to be printed upon during the passage of this sheet through the processing assembly, and for the sequence of at least one sheet that is to remain blank, controlling the processing assembly to ignore the processing parameter during the passage of the sequence through the processing assembly.

## Description

### Field of the Invention

The present invention generally pertains to printing devices for production environments. Production environments vary from-on the one hand-print shops on the smaller end of the spectrum: printing companies that produce professionally printed products on behalf of their (typically business) customers to-on the other hand-print factories that are typically operated in shifts (for example one, two, or even three 8-hour shifts per 24 hours) on the other end of the production printing spectrum. A typical example of a print factory is the on-demand printing of books, often for printing books for which it is no longer economically feasible to print in large batches with offset print technology, but are instead offered on-demand and printed digitally. In such environments productivity is key and productivity metrics such as printed sheets per hour or printed square meters per hour are Key Performance Indicators (KPIs).

The present invention more specifically pertains to a method of handling sheets in a printing device, wherein the sheets each have a media type and a media type has assigned to it a processing parameter

The present invention also pertains to a computer program product embodied on a non-transitory computer readable medium that, if executed on a processor, performs such a method.

The present invention further pertains to a printing device arranged to form images on sheets, wherein the sheets each have a media type and a media type has assigned to it a processing parameter.

### Background Art

It is known that a setup time may be needed in a printer in between print jobs if different job settings between the jobs require the printer to adjust its internal state. For example, it is known that when a printer switches from a simplex print job to a duplex print job, or vice versa, the printer needs to empty its media path before the switch can be made. The international patent application WO 2017/005545 A1 in the name of Océ Technologies B.V. describes a printing system that determines a most productive print job order by using its sheet scheduler to determine a print time for different permutations of the print jobs to be printed.

Another example of a setup time occurring is when a printer needs to change the temperature set point for a fuser unit that fixes marking material such as toner to the media. Due to thermal capacitance the fuser unit cannot change its temperature instantly, but requires a setup time to reach the new temperature set point. If a printer switches from printing on media of a first media weight, for example 80 g/m² (80 gsm), to a second media weight, for example 140 g/m² (140 gsm), the printer needs to schedule a pause between the media of the first media weight and the media of the second media weight to allow the fuser to reach a higher set point before the second media type reaches the fuser otherwise the toner will not be sufficiently fused and will lack proper adherence to the media.

Prior art production printing systems attempt to optimise the productivity by preventing excessive switching of print settings, for example by changing the scheduled order of sheets or the scheduled order of jobs.

It is an object of the present invention to improve the productivity further by reducing setup times caused by print setting switches. Reducing setup times may comprise reducing the number of occurrences of setup times or reducing the length of the setup times.

### Summary of the Invention

In a first aspect of the present invention, a method is provided of handling sheets in a printing device comprising a processing assembly that processes passing sheets by applying a processing parameter that is associated with a media type of each passing sheet. The method comprises the steps of: determining that a sequence of at least one sheet that is to pass through the processing assembly is to remain blank and that the sequence is preceded or followed by a sheet that is to be printed upon, controlling the processing assembly to apply the processing parameter for the sheet to be printed upon to this sheet to be printed upon during the passage of this sheet through the processing assembly, and for the sequence of at least one sheet that is to remain blank, controlling the processing assembly to ignore the processing parameter during the passage of the sequence through the processing assembly.

Printing devices for the professional market typically use media specifications to optimise the print quality for different types of media. These media specifications are stored in a media catalogue or may be received through job tickets. The media specifications may define information for informational or identification purposes such as a media name (for example "Top Coated Graphic+ Silk - 115 g/m^{2"}) or a media code (for example "MAC1391"). The media specifications may also define media properties, for example a size property ("320 mm × 450 mm"). Furthermore, the media specifications of a media type may also define process parameters that define parameters for the printing device to use when processing the media, for example a fixation temperature (a fuser temperature, a drying temperature), a maximum print gap, a preheating temperature, or an amount of corona treatment).

When printing sheets, prior art printing devices diligently lookup processing parameters for each media sheet they are processing according to the media type of the sheet and apply these processing parameters to each media sheet in each appropriate processing step. For example, the marking material (for example toner or ink) applied to the media is fixed to the media in a fixation step. The fixation unit (a fuser or drying unit) applies heat at a specified temperature to fix toner in a fuser or to dry ink in a heater. The prior art printing device even applies the specified fixation temperature if for example a blank sheet passes the fixation unit, in other words subjecting the sheet to heating at the fixation temperature to fix the marking material to the media. If the blank sheet has a media type that normally requires a different fixation temperature, the prior art printing devices will change the setpoint of the fixation unit and schedule the sheets with an intersheet time that is sufficiently long to allow the fixation unit's temperature to reach the new setpoint before the next sheet arrives, resulting in a pause between the blank sheet and the preceding or subsequent sheet.

The printing device according to the present invention will instead check whether a sheet is to remain blank. "To remain blank" means in this context that in a pass of a single side of the sheet along the image forming unit of the printing device, the image forming unit will not be controlled to deposit marking material on the sheet.

An exception can be made for sheets that are not part of the actual documents to be output by the printer (non-production sheets). For example, a spitting sheet is used for maintaining the condition of print head nozzles or for reconditioning print head nozzles and it is not to be part of the production output of the printer. Typically, spitting sheets are ejected to separate output locations, for example an error bin or a separate output tray to prevent them from being finished as part of a print job. As such non-production sheets are not part of the output, quality aspects of these sheets themselves do not affect the measured quality of the production output of the printer (the documents that make up the print jobs). Note that this does not mean that there is no relation between these non-production sheets and the quality of the production output. In the context of the present invention, such non-production sheets may be regarded as "sheets to remain blank".

Note that when a printing device is printing *duplex* instead of *simplex* two sides of the sheet are being printed. This typically happens in two passes: a first pass for the first side and a second pass for the second side. If only a single side of a sheet is being printed even though the sheet is handled in duplex mode, the sheet will make two passes and during one of these passes, the sheet is to remain blank. The side to remain blank can be handled according to the present invention.

A sequence of sheets as well as the notion of a sheet preceding or following such a sequence implies an ordering of the sheets. The implied ordering is the ordering wherein the sheets pass the processing assembly during one particular pass. This ordering is not necessarily the same as the order wherein sheets are fed from a paper input module or the order wherein sheets are output on an output stack. To illustrate this: in a duplex printer sheets are typically passed through a duplex loop allowing them to pass an image forming unit twice, in a first pass to print a first side of the sheet and in a second pass to print a second side of the sheet. First and second pass sheets are typically interwoven in the media path section of the image forming unit according to some interweaving pattern. The interwoven sheet stream comprises first and second pass sheets preceding or following each other. If the processing assembly is the image forming unit, a sequence of sheets to remain blank refers to these sheets forming a sequence when passing the image forming unit. The sequence may thus comprise first and second pass sheets, although this is not a necessity. The same applies to the sheet to be printed upon preceding or following the sequence of sheets that are to remain blank: preceding or following refers to whether this sheet precedes or follows the sequence of sheets in passing the processing assembly.

"A sequence" of sheets in the context of the invention not only refers to a sequence of two or more sheets, but also to a single sheet.

If the printing device according to the invention determines that a sheet is to remain blank for a pass, it checks whether there are processing parameters that may be ignored. For example, if the sheet is to remain blank, a fixation temperature becomes irrelevant. Therefore, the printing device according to the invention will ignore process parameters during the process steps applying such process parameters. Ignoring the process parameter means that the value of the process parameter specified by the media type of the sheet is not mandatory for the specific (blank) sheet and that any arbitrary value is acceptable (for example the value of the preceding or subsequent sheet that is to be printed upon).

Whether a process parameter can be ignored may be hard-coded in the printer's controller, but is preferably configurable through the printer settings or as part of the media specification.

The processing step in the processing assembly where the processing parameter is to be ignored may be any processing step operating on specific sheets in the printing device. This can be the image forming step itself. For example, the maximum print gap (distance between the print heads and the media surface of the sheet) in an image forming unit may be ignored as the maximum print gap is set to maintain image quality. For a sheet that is to remain blank image quality is irrelevant and therefore a print gap may be left larger than when the sheet would be printed upon.

The processing step may also be any processing step operating on specific sheets prior to an image forming step, such as a media pretreatment step like subjecting a sheet to corona treatment, preheating the media sheet, precurling a sheet in a precurl unit, etc.

The processing step may also be any processing step operating on specific sheets after the image forming step, such as the already mentioned image fixation step in a fixation unit, but also a media cooling step in a cooling unit, or a decurling step in a decurl unit.

Examples of processing parameters are: a fixation temperature (a fuser temperature, a drying temperature), a maximum print gap, a preheating temperature, a cooling temperature, an amount of corona treatment, a precurl amount, and a decurl amount.

In another aspect, the invention provides a method wherein ignoring the processing parameter for the sequence of at least one sheet that is to remain blank, comprises the processing assembly applying the determined processing parameter for the sheet that is to be printed upon as well to the sequence of at least one sheet that is to remain blank. In other words: in a prior art printer the blank sheet would cause the process parameter to be changed compared to the preceding or subsequent sequence of sheets to be printed upon due to the process parameter of the blank sheet's media type having a different value than the process parameter of the preceding or subsequent sheets' media type. In the present invention, the processing parameter associated with the media type of the blank sheet is not mandatory and the transition between the blank sheet and the preceding or subsequent sequence of sheets would not require the processing parameter to change. This results in the removal of a setup time to allow the processing parameter to change.

In another aspect of the invention a method is provided wherein the at least one processing parameter comprises a fixation amount, a pre-fixation amount, or a maximum print gap.

A fixation amount is for example a drying or fusion temperature, or a radiation amount in a curing process, such as UV curing. A pre-fixation amount is a temperature or radiation amount applied during a pre-fixation process. In a pre-fixation step marking material (typically ink drops) are immobilised on the media, but the ink is not sufficiently solidified or adhered to the surface to be considered robust. A (final) fixation step is performed later in the process to complete the fixation at a later stage.

A maximum print gap determines a maximum distance between a print head and the media surface. This gap may be specified as an actual distance between the print head and the media surface, but may also be specified as a distance between the print head and the media transport belt or media support surface. The maximum print gap is necessary to achieve a certain print quality. In general print quality reduces with an increasing print gap.

Note that there might also be a minimum print gap. The minimum print gap is the smallest distance allowed. A print gap smaller than the minimum print gap is considered to result in an unacceptable risk of the print head and the media touching each other (media touch) or even the leading edge of the media colliding with a side of the print head (print head collision).

The minimum print gap and maximum print gap may also be combined into a single *print gap* parameter. Within the scope of the present invention, ignoring a maximum print gap would then mean that an actual print gap exceeds the *print gap* parameter. The actual print gap being smaller than the *print gap* parameter would violate the minimum print gap though, which would not be allowed because a print head collision is still to be prevented. A media touch may in some cases be acceptable in a non-printing situation. However, even then ink smearing is still possible due to ink residuals on the nozzle plate, and physical media damage or nozzle plate damage is still a risk.

In one embodiment the present invention provides a printing device configured to form images on sheets that each have a media type associated therewith. The printing device comprises a processing assembly configured to process passing sheets by applying a processing parameter that is associated with the media type of each passing sheet. The printing device further comprises a controller for controlling the operation of the processing assembly.

The controller is configured to determine that a sequence of at least one sheet that is to pass through the processing assembly is to remain blank and that the sequence is preceded or followed by a sheet that is to be printed upon. The controller is further configured to control the processing assembly to apply the processing parameter for the sheet to be printed upon to this sheet during the passage of this sheet through the processing assembly.

The controller is also configured to control the processing assembly for the sequence of at least one sheet that is to remain blank, to ignore the processing parameter during the passage of the sequence of at least one sheet through the processing assembly.

In a further embodiment the invention provides a printing device wherein the controller is further configured to determine the processing parameter for the sheet that is to be printed upon, based on its media type.

In another embodiment the invention provides a printing device, wherein the controller is further configured to ignore the processing parameter in response to a determination that the processing parameter is of a type that can be ignored for sheets that are to remain blank.

The present invention provides in again another embodiment a printing device, wherein ignoring the processing parameter comprises the processing assembly applying the determined processing parameter for the sheet that is to be printed upon as well to the sequence of at least one sheet that is to remain blank.

In a particular embodiment according to the invention a printing device is provided, wherein the at least one processing parameter comprises a fixation amount or a pre-fixation amount.

In another embodiment according to the invention a printing device is provided further comprising at least one print head, and wherein the at least one processing parameter is a maximum print gap.

According to another embodiment of the invention a computer program product is provided that is embodied on a non-transitory computer readable medium that, if executed on a processor comprised in any of the above printing devices, performs the steps of any of the methods according to the invention.

### Brief Description of the Drawings

The present invention will become more fully understood from the detailed description given hereinbelow and the accompanying schematical drawings which are given by way of illustration only, and thus are not limitative of the present invention, and wherein:
Fig. 1 shows a typical reprographic apparatus wherein the invention may be applied.
Fig. 2 is a block diagram showing the components of a general reprographic apparatus wherein the invention may be implemented.
Fig. 3A shows the timing of sheets in case a blank sheet is of a media type requiring different processing parameters in a prior art printing device.
Fig. 3B shows the timing of sheets in case a blank sheet is of a media type requiring different processing parameters in a printing device according to the invention.
Fig. 4A shows the timing of sheets in case a blank sheet is interspersed in between media of types requiring different processing parameters in a prior art printing device.
Fig. 4B shows the timing of sheets in case a blank sheet is interspersed in between media of types requiring different processing parameters in a printing device according to the invention.
Fig. 5 shows a flow diagram of a first method according to the invention.
Fig. 6 shows a flow diagram of another method according to the invention.

### Detailed Description of the Drawings

The present invention will now be described with reference to the accompanying drawings, wherein the same reference numerals have been used to identify the same or similar elements throughout the several views.

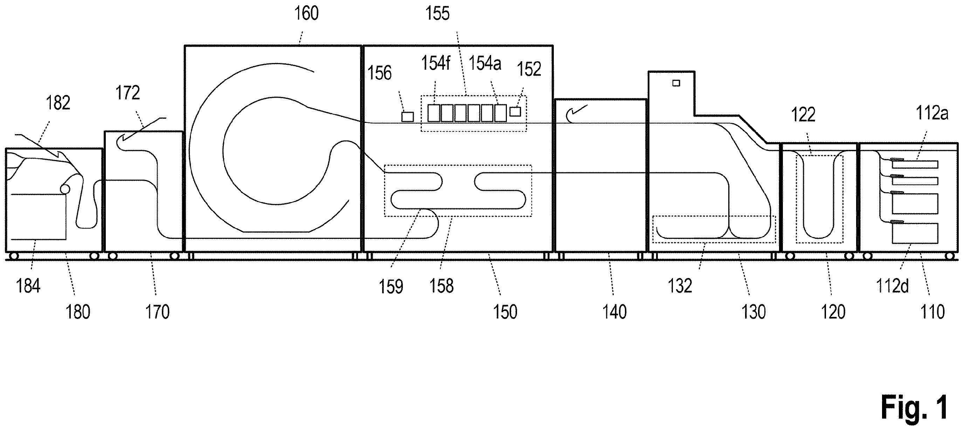

A typical reprographic apparatus wherein the present invention can be advantageously applied is a cut sheet production printer. Such a printer comprises (Fig. 1) one or more Paper Input Modules (PIM) 110 that store media that is to be printed upon. The PIM 110 comprises one or more input trays 112a-d that can each hold the same or differing types of media. During printing the PIM 110 is controlled to separate media sheets of the appropriate media type demanded by the print job from the media stacks held in the input trays 112a-d. For example a first input tray 112d may comprise standard, uncoated, white, 80 g/m² A4 sheets intended for mainly printing text and line art graphics whereas a second input tray 112a may comprise coated, white, 120 g/m² A4 sheets intended for mainly printing high resolution photographs. In such an example, depending on the page to be printed, the PIM 110 will be controlled to either separate a sheet from the stack in input tray 112a or from the stack in input tray 112d. Separated sheets are handed over to a next unit, such as a pretreatment unit 120.

The pretreatment unit 120 subjects passing sheets to a treatment prior to printing. The pretreatment unit 120 comprises a pretreatment device 122 that subjects passing sheets to a process such as preheating. Such a pretreatment may be applied to the sheet to improve the ink-media interaction. The pretreatment unit 120 comprises a bypass to allow sheets to bypass the pretreatment device 122.

The stream of unprinted sheets originating from the PIM 110 (directly or through a pretreatment unit 120) is merged with the return stream of sheets coming out of the duplex loop in a first Interface Unit 130. The first Interface Unit 130 comprises a turning station 132 to turn sheets returning from the duplex loop to allow the second side to be printed.

Sheets coming from the first Interface Unit (unprinted sheets as well as sheets having returned from the duplex loop) are fed to the SZ Correction Unit 140 which corrects the positioning of the sheets in the media path. Sheets may have a skew (S) or a lateral deviation (Z) from a nominal lateral position compared to the transport direction. Skew (S) is the angular deviation of the leading edge of a sheet from a direction perpendicular to the transport direction. s The sheet stream coming from the SZ Correction Unit 140 is fed to the Print Unit 150. In the Print Unit 150 the sheets pass the image forming unit 155 comprising print heads 154a-f which eject ink on the passing sheets to form an image on the sheets. Before the print heads 154a-f there is a media height sensor 152 to detect whether the passing sheets do not extend above a height threshold that depends on the print gap between the print heads 154a-f and the sheets passing underneath. If a sheet exceeds the height threshold the print heads 154a-f will be quickly raised to prevent a "head touch", or alternatively the media transport will make an emergency stop to prevent the "head touch". A head touch is undesirable as it causes image quality issues and may even damage the print head 154a-f. After the sheets have passed the print heads 154a-f they pass an inline scanner 156 that scans the printed images, typically to monitor print quality or colour consistency.

From the Print Unit 150 the sheets are fed to the Fixation Unit 160. In the Fixation Unit 160 the images are fixed to the media. In an inkjet printer the fixation happens by drying the media by subjecting the sheets to heat. In the Fixation Unit 160 the sheets are led back and enter the Print Unit 150 again where they enter a Cooling Device 158. The Cooling Device 158 cools the sheets back to a temperature suitable for further handling. The sheets pass a switch 159 that directs sheets that need a further printing pass through the duplex loop back to the Interface Unit 130 where they enter the Turning Station 132 to be turned over and then proceed to the merge point where they are merged with the unprinted sheets coming from the PIM 110 to further proceed to pass under the Print Heads 154a-f in the Print Unit 150 again. The sheets at switch 159 that do not need a further printing pass are directed to leave the Print Unit 150 again and are transported to the Output Unit 170. The Output Unit 170 outputs the sheets to Output Trays 172 (only one depicted), or outputs the sheets to a Sheet Stacker 180. The Stacker 180 may have its own Output Trays 182, but also has one or more Stacking Trays 184 for forming stacks of sheets.

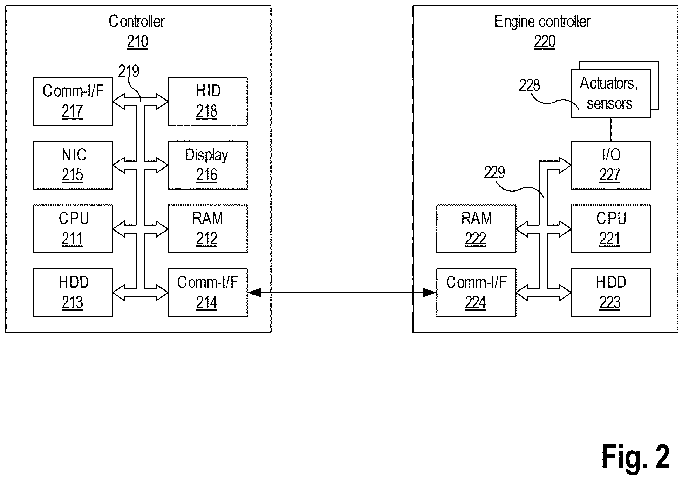

The operation of the printer is controlled through controller electronics. Typically the controller electronics, or *controller* comprise a high-level controller, the *printer controller* 210, and a low-level *embedded controller or engine controller* 220 (Fig. 2).

The engine controller 220 is responsible for low-level control of the apparatus. It deals with individual hardware components that are responsible for the reprographic process such as drives for media transport, media detectors (in the media path as well as in the input and output media trays), path switches, fusers, print heads, etc.; in general actuators and sensors 228. These actuators and sensors are connected through input/output (I/O) boards 227 to a bus 229. The bus 229 connects the major components in the engine controller 220. Actual data processing takes place in a central processing unit (CPU) 221. The CPU 221 reads sensor values from the sensors 228 through the I/O 227. Based on these sensor values and other data such as print data and print commands received from the printer controller 210, the CPU 221 determines how the engine controller 220 should respond to this information and determines appropriate actuation values that are sent through the I/O 227 to the actuators 228. The engine controller 220 comprises a volatile memory such as a random access memory (RAM) 222 to temporarily store data for processing such as the print data and print commands received from the printer controller 210, and the sensor values read from the sensors 228. Furthermore, a non-volatile memory such as a hard disk drive (HDD) 223 serves to store data in a more permanent manner, for example to survive a power down of the system. This hard disk drive 223 typically also stores embedded software comprising computer instructions that are run on the CPU 221. The engine controller 220 typically runs a real-time Operating System (RTOS), for example a soft real-time Operating System in order to deal with the time critical functions of controlling the actuators 228. The engine controller 220 further comprises a communication device 224 to communicate with the printer controller 210. Typically, the engine controller 220 receives print data and print commands from the printer controller 210 and provides back status information on the engine controller 220 itself and on the processing of the print commands and print data, including sending error messages to the printer controller 210.

The printer controller 210 is connected to the engine controller 220 through a communication device 214 that communicates with the communication device 224 of the engine controller 220. These communication devices 214, 224 may be implemented as Ethernet network interface controllers (NIC). Processing in the printer controller 210 is done by a CPU 211 that is connected to all the other components in the printer controller 210 through a bus 219. The data to be processed is temporarily stored in a volatile memory such as RAM 212, while data is stored in a more permanent manner in a non-volatile memory such as hard disk drive 213, for example in order to survive power downs, but also to relieve the volatile memory 212 which typically has a smaller storage size. The hard disk drive 213 typically stores print jobs, each comprising print data and a job ticket. Furthermore, the hard disk drive 213 comprises converted print data which is print data converted to a format suitable for processing by the engine controller 220. Typically the converted print data comprises raster images. Converting the print data in the print jobs to converted print data is typically done in a Raster Image Processor (RIP). Although the RIP may be a dedicated hardware device, it is common to be implemented in software and running on CPU 211. As the RIP-process is rather computationally intensive, it is common for controllers 210 to have multiple processing units in the form of a multi-core CPU 211 or multiple CPUs 211. The printer controller 210 further comprises a display 216 to show messages to an operator, or display a complete graphical user interface (GUI) to an operator for operating the reprographic apparatus. The display 216 is supplemented by a human interface device (HID) 218 such as a keyboard, mouse, touchpad, stylus, or a touch sensitive panel integrated into display 216, and allows the operator to operate the reprographic apparatus. The printer controller 210 comprises a communication interface 217 for communicating with peripheral devices such as finishers, for example, stackers, staplers, binders, punchers, cutters, trimmers, folders, media input units, etc. The printer controller 210 further comprises a network interface card (NIC) 215 to connect the printer controller 210 to a computer network. Through the network connection, print jobs may be submitted to the printer controller 210 and the results of scan jobs may be retrieved from the printer controller 210. For these operations the printer controller 210 may be directly in communication with individual workstations, or indirectly through a print server. Furthermore, the network connection may be used to remotely operate the reprographic apparatus, monitor its status, and send production data to monitoring systems, accounting systems, or business information systems. Note that in smaller printer models, specifically printers suitable for placement on desks, it is common to use communication interfaces such as USB, FireWire, or Bluetooth instead of the NIC 215.

The printer controller 210 and the engine controller 220 may be implemented in a single printing device (typical for smaller printers for low volume printing), or as two separate, but interconnected devices (typical for larger, high-volume production printers).

The engine controller 220 typically deals with print data on a sheet level, swath level, or even line level. The engine controller 220 is typically not aware of information on a document or even job level. In contrast the printer controller 210 typically receives print jobs comprising one or more documents, the documents typically comprising multiple pages.

In a printer according to the invention the controller determines whether a sheet scheduled to pass the image forming unit 155 is actually not to be printed upon (void pages) during that pass. Examples of void pages are for example *insert sheets, separator sheets,* and vacat pages.

Insert sheets are sheets that are typically preprinted and are fed from a separate input tray to merely be inserted in the correct position into the stream of sheets without printing on them.

Separator sheets are inserted into the stream to signal to the printer operator where a print job (job separator sheet) or copy set (set separator sheet) ends and another starts to allow the printer operator to easily separate the print jobs or copy sets from another. Separator sheets are not considered part of the print jobs and are typically removed by the printer operator after having separated the print jobs or copy sets.

Note that banner sheets may alternatively be used to separate print jobs or copy sets. Banner sheets are printed on though, for example with a print job identifier. Because banner sheets are printed upon, they are not considered separator sheets within the context of this invention. Note that banner sheets are typically printed on one side only. If the banner sheet is, although only printed on one side, being processed as a duplex sheet, the blank side of the banner sheet *is* a void page and may be processed as such according to the invention.

Vacat pages are pages that are defined in the print job as blank pages for various reasons. For example to separate sections in a document, or to force the start of a new chapter on the recto side of a sheet in case the previous chapter ends on a recto side. Sometimes vacat pages are printed on, for example the text "This page is intentionally left blank." If the vacat page is indeed left blank, the page is a void page. If it is being printed on, it is not a void page.

So void pages are sides of a sheet where the image forming unit 155 does not form any image on the sheet during the occurrence of a pass of a sheet through the image forming unit 155. Therefore, a sheet processed in simplex mode may have zero or one void pages and a sheet processed in duplex mode may have zero, one, or two void pages. In a multipass printer, sheets may have even more than two void pages depending on the number of passes wherein the image forming unit 155 does not print on the sheet.

The controller may detect void pages in various ways. For example, on the level of the printer controller 210 this may be determined by the kind (purpose) of the sheet, for example in the case of insert sheets or separator sheets. Furthermore, the printer controller 210 may detect that the Page Description Language (PDL) code for a specific page does not define the rendering of any objects. Furthermore, the printer controller 210 or the engine controller 220 may detect that for a page to be printed, no raster image or an empty raster image is defined.

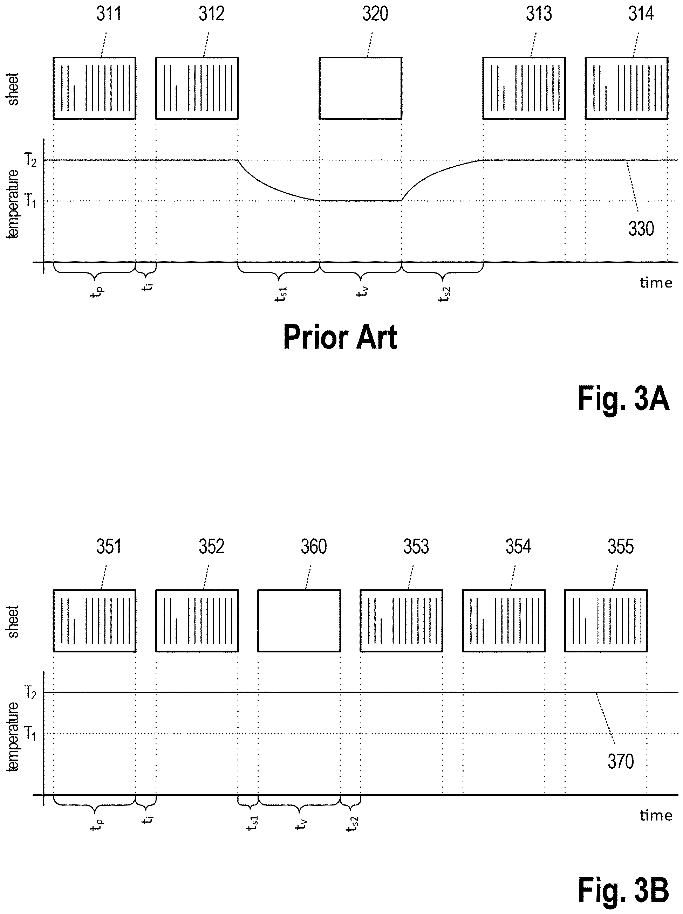

When a prior art printer prints a sequence of sheets 311-314 (Fig. 3A) with a void page 320 in between, for example a separator sheet, it schedules the sheets 311-314, 320 in accordance with the constraints of the printer. At a nominal printing speed the sheets 311-314 will be passing an arbitrary point in the media path during a time interval of duration tₚ. The separator sheet 320 will pass during a time interval of duration tᵥ. If the separator sheet 320 has the same length (length being the dimension of the sheet in the transport direction) as sheets 311-314, then assuming they are processed at the same nominal print speed: tᵥ = tₚ. Sheets will be transported with some space between them resulting in an intersheet time of tᵢ. The intersheet time tᵢ allows for sufficient time for-for example-media switches 159 in the media path to change position to divert sheets along different paths.

The printer engine will use fixation settings specific for the media type of the sheets 311-314 during fixation of these sheets and fixation settings specific for the media type of the void page 320 during fixation of the void page 320. If the separator sheet 320 has a different media weight than the surrounding sheets 311-314 (for example 60 g/m² instead of 80 g/m²), different fixation settings will be used. The sheets 311-314 will be fixed at a temperature T₂. However, because the separator sheet 320 has a lower media weight, it will be fixed at a lower temperature T₁. Because the separator sheet 320 is to be fixed at the lower temperature T₁, the separator sheet 320 can not follow the preceding sheet 312 too close as the fixation unit has to be given sufficient time to let its temperature decrease (see temperature curve 330) to the new setpoint T₁.

After the separator sheet 320 has passed the fixation unit, the same applies to the following sheet 313. The fixation unit has to be given sufficient time again to raise its temperature to the T₂ setpoint. So when the controller schedules the separator sheet 320 in between sheets 312 and 313, it will not use the nominal intersheet time tᵢ, but will use a proper setup time tₛ: for cooling down to the temperature T₁ a first setup time tₛ₁ and for warming up to the temperature T₂ a second setup time tₛ₂. Typically the duration of these setup times is significant compared to the intersheet time tᵢ.

Now, a printer according to the present invention in a similar situation will print sheets 351-355 (Fig. 3B) with a separator sheet 360 in between. The sheets 351-355 will be fixed at a temperature T₂. Assuming an identical nominal printing speed, each sheet 351-355 will pass the fixation unit during an interval of duration tₚ and the separator sheet will pass during an interval of duration tᵥ. At the same nominal printing speed an equal intersheet time tᵢ is necessary between the sheets. However, because the controller has determined that separator sheet 360 is to remain blank, it will ignore the processing parameters for "fixing" the separator sheet 360 and will keep the fixation temperature at T₂ instead of temporarily dropping it to T₁. Because the fixation temperature doesn't have to decrease (and afterwards increase), the "setup" times tₛ₁ and tₛ₂ can now be reduced to the nominal intersheet time tᵢ, (for example to accommodate for switches 159 to be operated in between the sheets). Therefore, the printer according to the invention is more productive compared to the prior art printer in the presence of void pages with differing media properties.

The process parameter that is to be ignored (the fixation temperature T₁ in the above example) can be any process parameter that has essentially no relevance for void pages. In another example, a pretreatment parameter like whether to apply a corona treatment to the media surface in a pretreatment device 122 may be the process parameter. Sheets to be printed upon will have the corona treatment applied, while a void page such as a separator page will not have the corona treatment applied, thus saving energy.

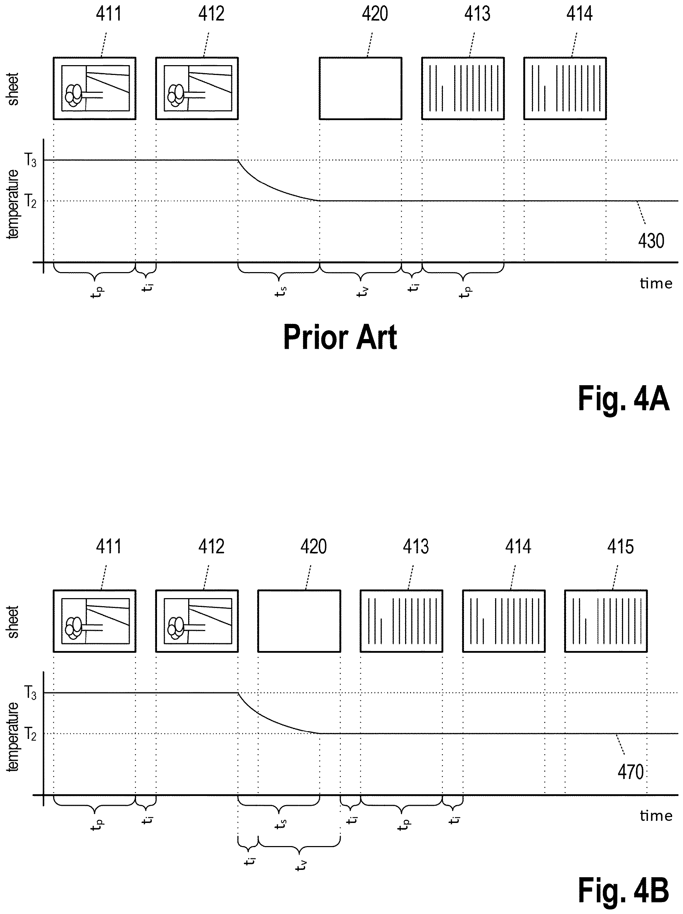

In another example the process parameter is again a fixation temperature. Again, first the prior art situation will be explained (Fig. 4A). A sequence of sheets 411-414 in a fixation unit 160 comprises sheets 411, 412 that are to contain some high-resolution, high-quality imagery that is to be printed on heavy stock, say 240 g/m². The first two sheets 411, 412 are followed by a void page 420 that is to be some standard stock, for example media with a media weight of 80 g/m². The void page 420 is followed by sheets 413, 414 that are to contain plain text and will be printed on standard stock again with a media weight of 80 g/m². Due to the high media weight of the first two sheets 411, 412, the fixation temperature in the fixation unit 160 is initially kept high at T₃. As soon as the last of these two sheets has passed the fixation unit 160, the fixation temperature is decreased to the new fixation temperature T₂ that is applicable for the void page, as well as the plain text sheets 413, 414. The void page 420 is scheduled such that the fixation temperature should have decreased to the new fixation temperature T₂ once the void page 420 has reached the fixation unit 160 to be "fixed" at the "correct" fixation temperature T₂. The void page 420 is followed by the last two sheets 413, 414 which are also fixed at the fixation temperature T₂. In order to allow the fixation unit 160 to lower the fixation temperature after sheet 412 has left the unit, a setup time tₛ₁ is left between sheets 412 and void page 420 ensuring the fixation temperature has reached the temperature setpoint T₂ before the void page 420 reaches the fixation unit. After void page 420 has been "fixed" the temperature setpoint remains at T₂, so the intersheet timing between the void page 420 and sheet 413 is only the nominal intersheet time tᵢ. The same applies to sheet 413 being followed by sheet 414: no change in fixation temperature is needed, so the intersheet time is also tᵢ. Due to the setup time tₛ being typically significantly longer than the nominal intersheet time tᵢ, the setup time tₛ results in a productivity loss.

A printer according to the present invention is able to ignore the processing parameter for the void page though. If the printer according to the invention prints the same sheets 411-414 (Fig. 4B) with void page 420 the timing for the first two sheets 411-412 remains the same. But after the second heavy stock sheet 412 has left the fixation unit, the fixation temperature for the void page 420 is to be ignored and the void page 420 will follow the second heavy stock sheet 412 with an intersheet time tᵢ. The passing of the void page 420 will take a void page time tᵥ. If we assume that the setup time tₛ to lower the fixation temperature from T₃ to T₂ is smaller than the sum of the intersheet time tᵢ between sheets 412 and 420, the void page time tᵥ, and the intersheet time tᵢ between sheets 420 and 413, the fixation unit has sufficient time to reach the new temperature setpoint T₂ before sheet 413 reaches the fixation unit, and the intersheet time between void page 420 and sheet 413 is only the nominal intersheet time tᵢ. Therefore, the intersheet timing between all sheets, including before and after void page 420 is the nominal intersheet time tᵢ. The setup time tₛ coincides with the intersheet times tᵢ before and after void page 420 and the void page time tᵥ allowing the fixation temperature to adjust while the void page 420 passes the fixation unit resulting in a productivity gain compared to the prior art printer.

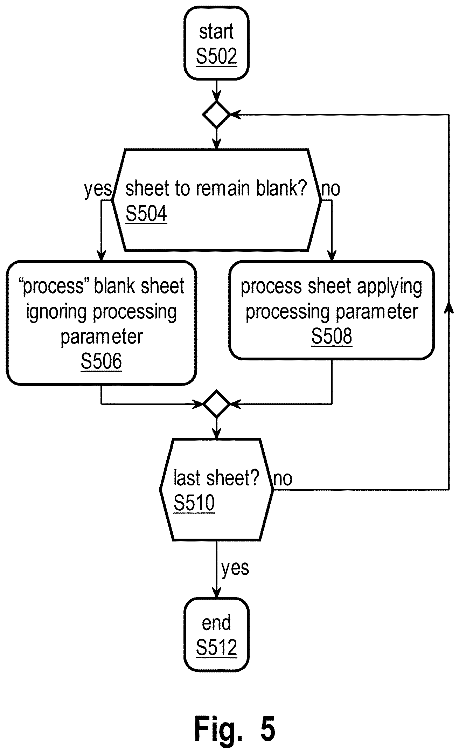

As discussed the invention might be implemented in the printer controller 210 or in the engine controller 220. The controller will execute a number of operations (Fig. 5). In a first implementation the controller determines S504 after starting S502 whether a sheet is to remain blank during a pass. If it isn't (no-branch) the processing assembly will be controlled by the controller to process S508 the sheet while applying the processing parameter associated with the media type of the sheet. Next, the controller will check S510 whether this was a last sheet to be processed. If it isn't (no-branch), the method starts a new iteration by determining S504 for a next sheet whether it is to remain blank. If the controller determines S504 that a sheet is to remain blank (yes-branch) the controller proceeds with controlling the processing assembly to "process" S506 the blank sheet while ignoring the processing parameter.

"Process" might mean in the case of the blank sheet that the processing assembly actually doesn't subject the sheet to any processing, for example by just letting the sheet pass on. Alternatively, "processing" while ignoring the processing parameter might also mean controlling the sheet to follow a bypass path therefore bypassing the processing assembly. In another alternative implementation, the processing assembly actually processes the blank sheet, but with a processing parameter that is determined by either the media type of the last preceding sheet that is to be printed upon, or the media type of the first following sheet that is to be printed upon.

After the controller has controlled the processing assembly to "process" S506 the blank sheet while ignoring the processing parameter associated with the blank sheet's media type, the controller checks S510 whether the sheet was the last sheet to be processed. If it isn't, the method loops back again (no-branch). If it is the last sheet (yes-branch), the method ends S512.

When the processing parameter of the blank sheet is ignored, and the ignoring takes the form of applying a processing parameter of an earlier or later sheet, the controller looks back or ahead to find a sheet that is to be printed upon to use the processing parameter of that sheet. In the case of "looking back" a simple implementation just leaves the processing parameter unaffected thus applying the processing parameter of one or more earlier sheets.

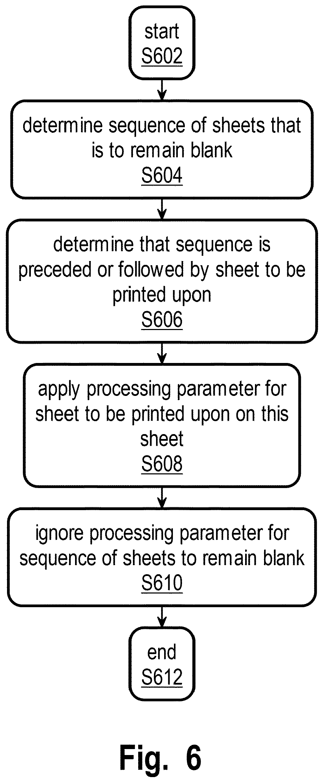

The approach described with regard to Fig. 5 describes the process from the perspective of the present sheet to be processed and either applies a processing parameter determined by this present sheet (as associated with the sheet's media type) or ignores the processing parameter with regard to this sheet, for example by applying the processing parameter of the last previous or the first following, non-blank sheet. Fig. 6 shows a slightly different perspective.

In one implementation the controller starts S602 with determining S604 that the sheets to be handled in the scheduled print jobs comprise a sequence of at least one sheet that is to remain blank. Furthermore, it is determined that this sequence of at least one sheet that is to remain blank is preceded or followed by a sheet that is to be printed upon. If the sheet that is to be printed upon passes the processing assembly 122, 160, the controller controls the processing assembly 122, 160 to apply the processing parameter that is associated with the media type of the sheet to this sheet. On the other hand, if the sequence of sheets to remain blank is to pass the processing assembly 122, 160, the controller controls the processing assembly 122, 160 to ignore the processing parameter or parameters that is associated with the media type or types of the sequence of sheets that is to remain blank. Once all sheets have passed the processing assembly 122, 160 the method ends S612.

The order of the steps is not restricted to the order as shown in Fig. 6. For example, steps S608 and S610 may be swapped depending on the order of the occurrence of the sheet to be printed upon relative to the sequence of sheets to remain blank.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or as used herein, are defined as comprising (i.e., open language). The term coupled, as used herein, is defined as connected, although not necessarily directly.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. Method of handling sheets in a printing device comprising a processing assembly that processes passing sheets by applying a processing parameter that is associated with a media type of each passing sheet, the method comprising the steps of:
- determining that a sequence of at least one sheet that is to pass through the processing assembly is to remain blank and that the sequence is preceded or followed by a sheet that is to be printed upon,
- controlling the processing assembly to apply the processing parameter for the sheet to be printed upon to this sheet to be printed upon during the passage of this sheet through the processing assembly, and
- for the sequence of at least one sheet that is to remain blank, controlling the processing assembly to ignore the processing parameter during the passage of the sequence through the processing assembly.

2. The method according to claim 1 further comprising the step of determining the processing parameter for the sheet that is to be printed upon, based on its media type.

3. The method according to claim 1 or 2 wherein the processing assembly is controlled to ignore the processing parameter in response to a determination that the processing parameter is of a type that can be ignored for sheets that are to remain blank.

4. The method according to claim 1, 2, or 3 wherein ignoring the processing parameter for the sequence of at least one sheet that is to remain blank, comprises the processing assembly applying the determined processing parameter for the sheet that is to be printed upon as well to the sequence of at least one sheet that is to remain blank.

5. The method according to any of the preceding claims wherein the at least one processing parameter comprises a fixation amount, a pre-fixation amount, or a maximum print gap.

6. Printing device configured to form images on sheets that each have a media type associated therewith, the printing device comprising:
- a processing assembly configured to process passing sheets by applying a processing parameter that is associated with the media type of each passing sheet; and
- a controller for controlling the operation of the processing assembly,
wherein the controller is configured to:
• determine that a sequence of at least one sheet that is to pass through the processing assembly is to remain blank and that the sequence is preceded or followed by a sheet that is to be printed upon,
• controlling the processing assembly to apply the processing parameter for the sheet to be printed upon to this sheet during the passage of this sheet through the processing assembly, and
• for the sequence of at least one sheet that is to remain blank, controlling the processing assembly to ignore the processing parameter during the passage of the sequence of at least one sheet through the processing assembly.

7. The printing device according to claim 6, wherein the controller is further configured to determine the processing parameter for the sheet that is to be printed upon, based on its media type.

8. The printing device according to claim 6 or 7 wherein the controller is further configured to ignore the processing parameter in response to a determination that the processing parameter is of a type that can be ignored for sheets that are to remain blank.

9. The printing device according to claim 6, 7, or 8 wherein ignoring the processing parameter comprises the processing assembly applying the determined processing parameter for the sheet that is to be printed upon as well to the sequence of at least one sheet that is to remain blank.

10. The printing device according to any of claims 6-9 wherein the at least one processing parameter comprises a fixation amount or a pre-fixation amount.

11. The printing device according to any of claims 6-10 further comprising at least one print head, and wherein the at least one processing parameter is a maximum print gap.

12. A computer program product embodied on a non-transitory computer readable medium that, if executed on a processor comprised in a printing device according to any of claims 6-11, performs the steps of the method of any of claims 1-5.
